# EUROPÄISCHE PATENTSCHRIFT

(11) **EP 2 396 242 B1**
(45) Veröffentlichungstag und Bekanntmachung des Hinweises auf die Patenterteilung: **09.01.2013**
(21) Anmeldenummer: 10700027.5
(22) Anmeldetag: 11.01.2010
(51) Int. Cl.: B65D 77/22, F16K 99/00

(54) **ÜBERDRUCKVENTIL MIT KLEINEN ABMESSUNGEN**
COMPACT PRESSURE RELIEF VALVE
SOUPAPE DE SURPRESSION DE PETITES DIMENSIONS

(30) Priorität: 12.02.2009 DE 102009000806
(43) Veröffentlichungstag der Anmeldung: 21.12.2011
(73) Patentinhaber: Robert Bosch GmbH, 70442 Stuttgart (DE)
(72) Erfinder: STADEL, Hans-Peter, 73547 Lorch (DE); STOTKIEWITZ, Herbert, 74321 Bietigheim-Bissingen (DE); HAAK, Juergen, 6000 AA Weert (DE)
(86) Internationale Anmeldenummer: PCT/EP2010/050214
(87) Internationale Veröffentlichungsnummer: WO 2010/091909

(56) Entgegenhaltungen:
- EP-B1- 1 802 537
- CH-A5- 640 327
- DE-A1- 3 229 242
- US-A1- 2007 204 918

## Beschreibung

### Stand der Technik

Die vorliegende Erfindung betrifft ein Überdruckventil für einen Verpackungsbehälter, welches sehr kleine Abmessungen aufweist.

Überdruckventile für Verpackungsbehälter sind aus dem Stand der Technik in unterschiedlichen Ausgestaltungen bekannt. Die Verwendung von Ventilen, insbesondere an flexiblen Verpackungen für Lebensmittel, ist bereits durch eine Vielzahl von technischen Varianten realisiert. Eine Hauptanforderung an derartige Ventile ist, dass sie durch entsprechendes Öffnen nur geringe Überdrücke in der Verpackung zulassen und ansonsten das Eindringen von Umgebungsluft sicher verhindern. Das Eindringen von Umgebungsluft muss dabei auch bei sehr geringen Drücken in der Verpackung verhindert werden. In der Praxis sind die beiden oben genannten Ziele jedoch zueinander gegenläufig, da einerseits ein nur kleiner Öffnungsdruck zum Öffnen des Ventils vorhanden sein soll und andererseits eine hohe Vakuumfestigkeit bereitgestellt werden soll. Daher haben Ventile, die eine hohe Vakuumfestigkeit aufweisen, auch einen sehr hohen Öffnungsdruck. Im Gegensatz dazu haben Ventile mit nur geringem Öffnungsdruck nicht die notwendige Vakuumfestigkeit.

Aus der EP 1 802 537 B1 ist ein Überdruckventil bekannt, welches in einer Vertiefung in einem Grundkörper teilweise unplan ausgebildet ist. Hierdurch ergeben sich Zonen unterschiedlichen Abstands zwischen der Vertiefung und einer Ventilmembran. Dieses Ventil hat sich grundsätzlich bewährt, allerdings gibt es in jüngster Zeit verstärkt Anwendungsfälle, welche eine verbesserte Öffnungscharakteristik und Vakuumfestigkeit erfordern.

### Offenbarung der Erfindung

Das erfindungsgemäße Überdruckventil mit den Merkmalen des Anspruchs 1 weist demgegenüber den Vorteil auf, dass es schon bei sehr kleinen Überdrücken über dem Umgebungsdruck von kleiner als 1000 Pa (10 mbar), insbesondere kleiner als 500 Pa (5 mbar) öffnet und eine sehr hohe Vakuumfestigkeit bei einem Druckunterschied von über 60000 Pa zwischen Innenseite und Außenseite der Verpackung aufweist. Darüber hinaus ist das erfindungsgemäße Überdruckventil sehr kleinbauend ausgelegt, so dass es an der Verpackung sehr unauffällig angebracht werden kann. Durch die Reduzierung der Abmessungen des Überdruckventils werden einerseits Materialkosten reduziert und insbesondere eine Positionierung des Überdruckventils an der Verpackung variabler. Ferner kann eine bessere Applikation des Überdruckventils an die Verpackung erfolgen, da kleinere Siegelkräfte aufgrund der geringeren Siegelfläche aufzubringen sind. Darüber hinaus weist das Überdruckventil nur zwei Hauptbauteile, nämlich einen Grundkörper und eine Membran auf. Dies wird erfindungsgemäß dadurch erreicht, dass der Grundkörper eine Ausnehmung zur Aufnahme der Membran aufweist, wobei die Membran einen ersten Durchmesser aufweist. Der Grundkörper ist dabei zylindrisch mit einer geringen Höhe gebildet und weist einen zweiten Durchmesser auf. Dabei beträgt eine Länge des ersten Durchmessers zwischen 70 und 80% des zweiten Durchmessers, bevorzugt 75% des zweiten Durchmessers. Dabei beträgt ein maximaler Wert für den zweiten Durchmesser ca. 13,5 bis 15,5 mm. Weiter ist am Grundkörper eine sich nach innen verjüngende Dichtfläche vorgesehen, an welcher die Membran dichtend aufliegt, wobei ein Fluid zwischen der Membran und der Dichtfläche angeordnet ist. Durch die sich verjüngende Dichtfläche ergibt sich dabei eine unterschiedliche Ausbildung einer Dicke des Fluidfilms zwischen der Dichtfläche und der Membran, wobei insbesondere an der radial äußeren Seite der Dichtfläche ein dünnerer Fluidfilm vorgesehen ist als an einer radial inneren Seite. Hierdurch ergeben sich unterschiedliche Adhäsionskräfte und kapillare Kräfte, welche an der radial inneren Seite kleiner sind und ein leichteres Öffnen per Überdruck ermöglichen und an der radial äußeren Seite größer sind und für eine verbesserte Vakuumfestigkeit sorgen.

Die Unteransprüche zeigen bevorzugte Weiterbildungen der Erfindung.

Vorzugsweise ist radial innerhalb der Dichtfläche eine innere Ringnut im Grundkörper ausgebildet. Innerhalb der inneren Ringnut ist ein zentraler Basisbereich gebildet, in welchem eine oder mehrere Durchgangsöffnungen angeordnet sind. Hierdurch kann ein besonders stabiler Grundkörper bereitgestellt werden, welcher auch höchsten Druckanforderungen genügt.

Weiter bevorzugt ist radial außerhalb der Dichtfläche eine äußere Ringnut im Grundkörper angeordnet. Die äußere Ringnut grenzt dabei unmittelbar an den Randbereich 18 an. Hierdurch kann sichergestellt werden, dass eine Abmessung bzw. ein Durchmesser des Grundkörpers möglichst klein ist.

Gemäß einer weiteren bevorzugten Ausgestaltung der Erfindung umfasst der Grundkörper eine Vielzahl von Halteelementen, welche am Randbereich angeordnet sind und einstückig mit dem Grundkörper gebildet sind. Die Halteelemente verhindern dabei ein Herausfallen der Membran, wodurch auf ein separates Niederhalteteil für die Membran verzichtet werden kann.

Weiterhin sind am Grundkörper eine Vielzahl von radial nach innen vorstehenden Nasen angeordnet, welche die Membran zwischen sich zentrieren. Hierdurch kann eine sichere und einfache Positionierung der Membran sowohl bei der Montage als auch im Betrieb erreicht werden.

Bevorzugt ist ein Niveau des zentralen Basisbereichs gleich einem Niveau einer Innenkante an der Dichtfläche. Mit dem Begriff "Niveau" ist dabei eine Ebene senkrecht zu einer Mittelachse des Überdruckventils bezeichnet, wobei ein höheres Niveau bedeutet, dass diese Ebene näher in Richtung zur Verpackungswand liegt.

Gemäß einer weiteren bevorzugten Ausgestaltung der vorliegenden Erfindung umfasst die Durchgangsöffnung Perforationen, welche an einem Boden in der Durchgangsöffnung angeordnet sind. Die Perforationen können dabei symmetrisch oder asymmetrisch angeordnet sein. Die Perforationen sind dabei jeweils durch eine Vielzahl von Mikrobohrungen gebildet, wobei eine Mikrobohrung einen Durchmesser zwischen 30 bis 120 µm aufweist.

Weiter bevorzugt weist die Membran eine verformbare bzw. weiche Oberfläche auf. Diese weiche Oberfläche der Membran ermöglicht es, dass sie sich bei der Abdichtung an der Dichtfläche des Grundkörpers verformt und so zu einer weiter verbesserten Abdichtung beiträgt.

Weiter bevorzugt umfasst der Randbereich des Grundkörpers einen Innenring, einen Außenring und einen Mittelring, wobei der Mittelring von einer Basisfläche weiter vorsteht als der Innenring und der Außenring. Dadurch kann während eines Siegelvorgangs zur Fixierung des Überdruckventils an einer Innenseite einer Verpackung sichergestellt werden, dass z.B. beim Siegelvorgang erzeugte Partikel in die ringförmigen Zwischenräume zwischen dem Innenring und dem Mittelring bzw. dem Mittelring und dem Außenring fallen und nicht in das Überdruckventil gelangen können.

Das erfindungsgemäße Überdruckventil wird vorzugsweise in Lebensmittelverpackungen, insbesondere von pulverförmigen Stoffen, wie z.B. Kaffee, verwendet.

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Schnittansicht eines Überdruckventils gemäß einem ersten Ausführungsbeispiel der Erfindung,
- Figur 2: eine schematische Schnittansicht eines Teilbereichs eines Grundkörpers des Überdruckventils von Figur 1,
- Figur 3: eine schematische Draufsicht des Grundkörpers von Figur 1,
- Figur 4: eine schematische Schnittansicht eines Grundkörpers eines Überdruckventils gemäß einem zweiten Ausführungsbeispiel,
- Figur 5: eine schematische Draufsicht des Grundkörpers von Figur 4.

### Bevorzugte Ausführungsform der Erfindung

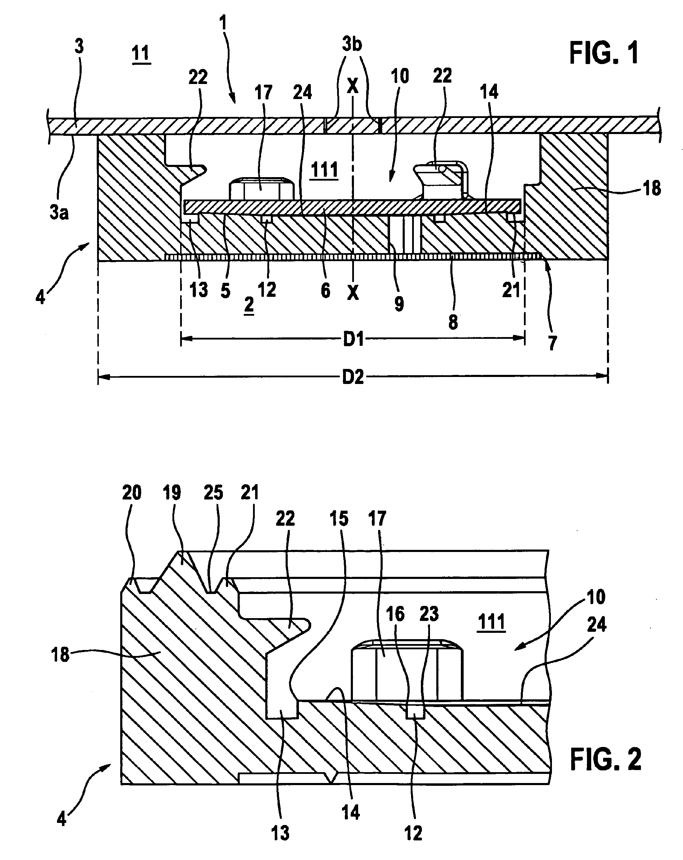

Nachfolgend wird unter Bezugnahme auf die Figuren 1 bis 3 ein Überdruckventil 1 gemäß einem ersten bevorzugten Ausführungsbeispiel der Erfindung im Detail beschrieben.

Wie aus Figur 1 ersichtlich ist, umfasst das erfindungsgemäße Überdruckventil 1 einen Grundkörper 4 und eine Membran 6. Das Überdruckventil 1 ist an eine Innenseite 3a einer Verpackung 3 mittels eines Siegelvorgangs fixiert. In der Verpackung 3 sind Öffnungen 3b vorgesehen, unter welchen das Überdruckventil 1 befestigt ist. In Figur 1 ist ein Innenraum der Verpackung 3 mit dem Bezugszeichen 2 gekennzeichnet und ein Außenraum der Verpackung (Umgebung) mit dem Bezugszeichen 11 gekennzeichnet. Das Überdruckventil 1 hat dabei die Aufgabe, einen gegebenenfalls in der Verpackung 3 entstehenden Überdruck zur Außenseite 11 abzugeben und ein gegebenenfalls in der Verpackung 3 herrschendes Vakuum gegenüber der Außenseite abzudichten.

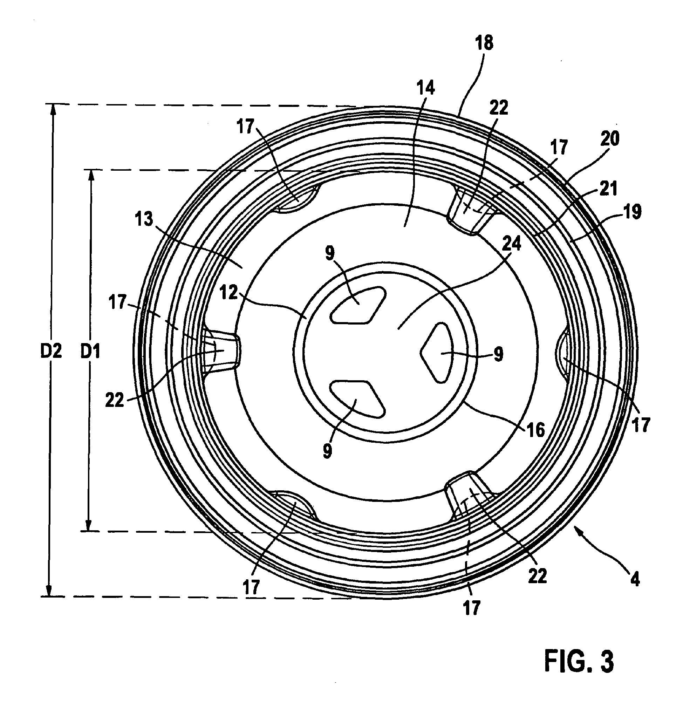

Der Grundkörper 4 ist zylindrisch oder geringfügig konisch und mit einer relativ kleinen Höhe ausgebildet und umfasst einen Randbereich 18 sowie eine Ausnehmung 10, in welcher die Membran 6 angeordnet ist. Wie aus Figur 1 ersichtlich ist, definiert die Ausnehmung 10 im montierten Zustand des Überdruckventils einen Raum 111, der durch den restlichen Grundkörper bzw. einen Teil der Innenwand 3a der Verpackung 3 begrenzt ist. Der Grundkörper 4 weist ferner eine Dichtfläche 14 sowie einen mittleren Grundbereich 24 auf. Im mittleren Grundbereich 24 sind drei Durchgangsbohrungen 9 gebildet (Figur 3), über welche bei einem Überdruck in der Verpackung Gas abströmen kann. Im Grundkörper 4 ist ferner eine innere Ringnut 12 und eine äußere Ringnut 13 gebildet. Wie aus Figur 1 ersichtlich ist, geht die äußere Ringnut 13 unmittelbar in den Randbereich 18 über. Ferner sind am Randbereich 18 drei Niederhalteelemente 22 sowie mehrere radial nach innen vorstehende Nasen 17 zur Zentrierung der Membran 6 integral gebildet, d.h., die Niederhalteelemente 22 und die Nasen 17 sind einstückig mit dem Grundkörper 4 gebildet. Die Anordnung der Nasen 17 am umlaufenden Ring bildet eine besonders platzsparende Anordnung. Weiter umfasst der Randbereich 18 einen Mittelring 19, einen Außenring 20 sowie einen Innenring 21. Der Mittelring 19 steht dabei im noch nicht gesiegelten Zustand wie in Figur 2 gezeigt, von einer Basisfläche 25 weiter vor als der Außenring 20 und der Innenring 21. Wie weiter aus Figur 2 ersichtlich ist, ist eine Außenkante 15 am Übergang zwischen der Dichtfläche 14 und der äußeren Ringnut 13 gebildet. Weiterhin ist eine Innenkante 16 am Übergang zwischen der Dichtfläche 14 und der inneren Ringnut 12 gebildet. Die Dichtfläche 14 ist dabei, wie ebenfalls aus Figur 2 ersichtlich ist, sich radial nach innen verjüngend gebildet. Hierbei weist die Dichtfläche 14 eine leicht konische Form auf, wobei die Außenkante 15 auf einem Niveau senkrecht zu einer Mittelachse X-X liegt, welches näher an der Innenseite 3a der Verpackung liegt als ein Niveau einer Innenkante 16.

Durch diese konische Ausbildung der Dichtfläche 14 wird erreicht, dass ein Fluid 5, welches zwischen dem Grundkörper 4 und der Membran 6 angeordnet ist, in radialer Richtung an der Dichtfläche 14 eine unterschiedliche Dicke aufweist. Hierbei weist eine Fluidschicht im Bereich der Außenkante 15 eine geringere Dicke auf als im Bereich der Innenkante 16. Aufgrund der unterschiedlichen Fluidschichtdicken ergeben sich somit unterschiedliche Adhäsionskräfte und kapillare Kräfte, welche das Öffnungs- und Schließverhalten der Membran stark beeinflussen. Hierbei treten an der Außenkante 15, an der die geringeren Fluidschichtdicken vorhanden sind, größere adhäsive Kräfte auf, so dass hierdurch eine verbesserte Vakuumfestigkeit erhalten werden kann. Im Gegensatz dazu ist die Fluidschichtdicke im Bereich der Innenkante 16 etwas größer, so dass dort etwas kleinere Adhäsionskräfte bzw. kapillare Kräfte vorhanden sind, so dass von dort ein Öffnungsvorgang der Membran leichter erfolgen kann.

Wie weiter aus Figur 1 ersichtlich ist, weist die Ausnehmung 10 einen ersten Durchmesser D1 auf, welcher ca. 75% eines Außendurchmessers D2 des Grundkörpers 4 aufweist (D1 = 0,75 x D2). Hierdurch kann sichergestellt werden, dass der Grundkörper 4 und somit auch das Überdruckventil 1 nur sehr kleine Abmessungen aufweisen, da der Randbereich 18 nur getrennt durch die äußere Ringnut 13 in die Dichtfläche 14 übergeht. Aufgrund der sehr kleinen Abmessungen des Überdruckventils 1 kann dieses somit sehr variabel an der Verpackung 3 platziert werden. Hierdurch kann insbesondere auf verschiedene Gegebenheiten der Verpackung wie z.B. äußere Gestalt oder Material der Verpackung, eingegangen werden. Der Außendurchmesser D2 des Grundkörpers beträgt dabei 14,5 mm. Ferner kann durch die kleinen Abmessungen des Grundkörpers 4 auch erreicht werden, dass die Membran 4 fast bis zum Randbereich 18 reicht, wobei hier zwischen der Membran 6 und dem Randbereich 18 ein kleiner Spalt vorhanden ist, um eventuell aus der Verpackung abzugebendes Gas auszulassen. An der zum Innenraum 2 gerichteten Seite 7 des Grundkörpers 4 ist ferner ein Filter 8 angeordnet.

Die Funktion des erfindungsgemäßen kompakten Überdruckventils 1 ist dabei wie folgt. Wenn ein Druck in der Verpackung 3 über einem Umgebungsdruck der Außenseite 11 liegt, so wirkt eine von der Summe der Querschnitte der Durchgangsöffnungen 9 abhängige Kraft von Innen gegen die Membran 6. Die Membran 6 liegt dabei auf dem mittleren Grundbereich 24 auf. Da die Membran 6 flexibel ist und der mittlere Grundbereich 24 in einer Ebene senkrecht zur Mittelachse X-X liegt, kann die Membran von dort relativ einfach bei schon geringem Überdruck unter 500 Pa abgehoben werden. Da an der Dichtfläche 14 zusätzlich ein Fluid vorgesehen ist, wirken hier kapillare und adhäsive Kräfte der Fluidschicht gegen die Druckkraft, die auf die Membran wirkt. Diese kapillaren und adhäsiven Kräfte nehmen grundsätzlich mit zunehmender Fluidschichtdicke ab. Da die Fluidschichtdicke im Bereich der Innenkante 16 größer ist als im Bereich der Außenkante 15, sind vergleichsweise kleine Druckkräfte erforderlich, um die kapillaren und adhäsiven Kräfte im Bereich der Innenkante 16 zu überwinden. Infolge der Flexibilität der Membran 6 vergrößert sich dabei die Angriffsfläche für den inneren Überdruck, so dass die stärkeren kapillaren und adhäsiven Kräfte im Bereich der Außenkante 15 leichter überwunden werden können, bis das Ventil öffnet.

Bei einem Unterdruck im Innenraum 2 der Verpackung gegenüber der Außenseite 11 wirken dagegen die großen kapillaren und adhäsiven Kräfte im Bereich der Außenkante 15 und halten somit die Membran sicher und abdichtend an der Dichtfläche 14. Dadurch weist das erfindungsgemäße Überdruckventil eine hohe Vakuumfestigkeit auf.

Es sei angemerkt, dass auch ein Niveau des mittleren Grundbereichs 24 etwas tiefer liegen kann als ein Niveau der Innenkante 16. Wenn an einer Oberfläche der Membran 6, die zur Dichtfläche 14 gerichtet ist, ferner noch eine weiche bzw. verformbare Oberfläche ausgebildet ist, unterstützt diese Oberfläche einerseits die Vakuumfestigkeit aufgrund ihrer Verformbarkeit, wobei insbesondere die sich verjüngende Anordnung der Dichtfläche 14 zusätzlich noch das Entstehen einer Fluidschichtdicke mit unterschiedlichen Dicken im Bereich der Außenkante 15 und im Bereich der Innenkante 16 unterstützt.

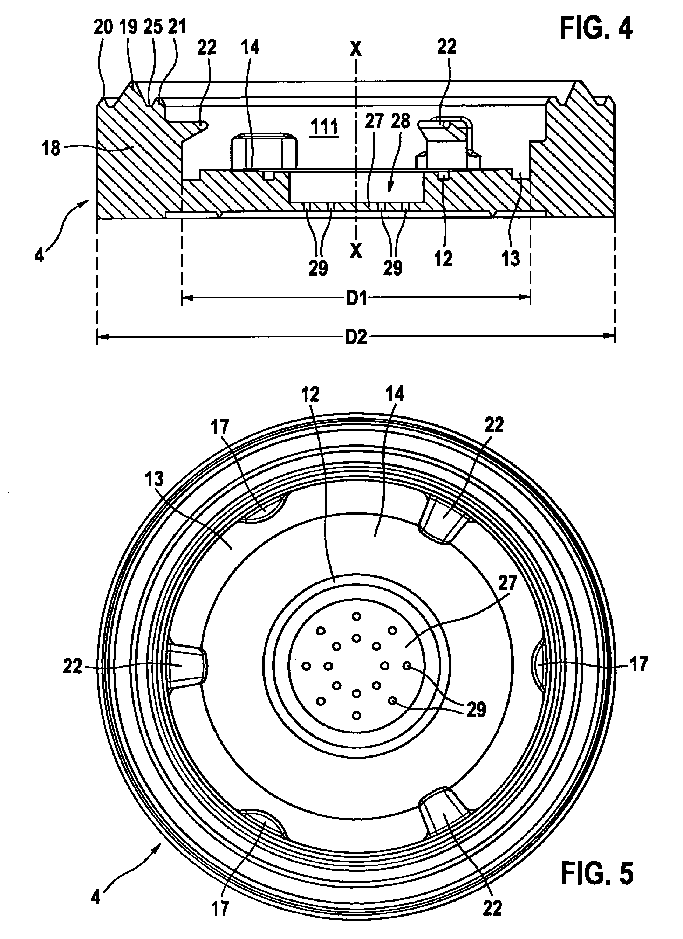

Nachfolgend wird unter Bezugnahme auf die Figuren 4 und 5 ein Überdruckventil gemäß einem zweiten Ausführungsbeispiel der Erfindung beschrieben, wobei gleiche bzw. funktional gleiche Teile mit den gleichen Bezugszeichen wie im ersten Ausführungsbeispiel bezeichnet sind.

Wie aus den Figuren 4 und 5 ersichtlich ist, entspricht das zweite Ausführungsbeispiel im Wesentlichen dem ersten Ausführungsbeispiel. Im Unterschied dazu ist statt eines massiven mittleren Grundbereichs 24 ein mittlerer Grundbereich vorgesehen, welcher eine Vertiefung 28 und eine Grundfläche 27 aufweist.

In der Grundfläche 27 ist eine Perforation, umfassend eine Vielzahl von Mikrobohrungen 29 vorgesehen. Die Mikrobohrungen 29 weisen dabei jeweils einen Durchmesser zwischen 30 bis 120 µm auf und sind, wie aus Figur 5 ersichtlich ist, auf mehreren konzentrischen Kreisen angeordnet. Die Anordnung der Mikrobohrungen 29 ist dabei symmetrisch vorgesehen. Durch die Verwendung der Mikrobohrungen kann insbesondere auf den Filter 8 verzichtet werden, so dass eine Bauteilezahl des Überdruckventils weiter reduziert werden kann. Ansonsten entspricht dieses Ausführungsbeispiel dem ersten Ausführungsbeispiel, so dass auf die dort gegebene Beschreibung verwiesen werden kann.

## Patentansprüche

1. Überdruckventil für einen Verpackungsbehälter (3), umfassend
- einen Grundkörper (4) mit wenigstens einer Durchgangsöffnung (9, 29), einer Dichtfläche (14) und einem Randbereich (18), wobei der Randbereich (18) mit einer Innenseite (3a) des Verpackungsbehälters (3) abdichtend verbindbar ist, und wobei die Dichtfläche (14) eine sich nach innen verjüngende Form aufweist, und
- eine flexible Membran (6), welche auf der Dichtfläche (14) des Grundkörpers (4) aufliegt, um eine Dichtwirkung zu erzeugen, wobei die Membran (6) die Durchgangsöffnung (9) abdeckt und wobei ein Fluid (5) zwischen der Dichtfläche (14) und der Membran (6) angeordnet ist,
- wobei im Grundkörper (4) eine Ausnehmung (10) zur Aufnahme der Membran (6) ausgebildet ist,
**dadurch gekennzeichnet, dass**
- die Ausnehmung (10) einen ersten Durchmesser (D1) aufweist, welcher zwischen 70 und 80% eines Gesamtdurchmessers (D2) des Grundkörpers (4) aufweist, und
- am Randbereich (18) eine Vielzahl von radial nach innen vorstehenden Nasen (17) angeordnet ist, wobei die Nasen (17) die Membran (6) zwischen sich zentrieren.

2. Überdruckventil nach Anspruch 1, **dadurch gekennzeichnet, dass** radial innerhalb der Dichtfläche (14) eine innere Ringnut (12) im Grundkörper (4) angeordnet ist und innerhalb der inneren Ringnut (12) ein zentraler Grundbereich (24) gebildet ist, in welchem die Durchgangsöffnung (9) angeordnet ist.

3. Überdruckventil nach Anspruch 1 oder 2, **dadurch gekennzeichnet, dass** radial außerhalb der Dichtfläche (14) eine äußere Ringnut (13) im Grundkörper (4) angeordnet ist, wobei der Randbereich (18) unmittelbar an die äußere Ringnut (13) angrenzt.

4. Überdruckventil nach einem der vorherigen Ansprüche, ferner umfassend eine Vielzahl von Halteelementen (22), welche am Randbereich (18) angeordnet sind und einstückig mit dem Grundkörper (4) gebildet sind.

5. Überdruckventil nach einem der Ansprüche 2 bis 4, **dadurch gekennzeichnet, dass** ein Niveau des zentralen Grundbereichs (24) senkrecht zu einer Mittelachse (X-X) einem Niveau einer Innenkante (16) der Dichtfläche (14) entspricht.

6. Überdruckventil nach einem der vorherigen Ansprüche, **dadurch gekennzeichnet, dass** die Durchgangsöffnung eine Grundfläche (27) mit einer Vielzahl von Mikrobohrungen (29) umfasst, wobei die Mikrobohrungen (29) insbesondere einen mittleren Durchmesser zwischen 30 und 120 µm aufweisen.

7. Überdruckventil nach einem der vorherigen Ansprüche, **dadurch gekennzeichnet, dass** die Membran (6) eine zur Dichtfläche (14) gerichtete, verformbare Oberfläche aufweist.

8. Überdruckventil nach Anspruch 7, **dadurch gekennzeichnet, dass** die verformbare Oberfläche der Membran (6) aus EPDM oder NBR oder Silikon-Kautschuk hergestellt ist.

9. Überdruckventil nach einem der vorherigen Ansprüche, **dadurch gekennzeichnet, dass** der Randbereich (18) des Grundkörpers (4) vor einem Siegelvorgang an den Verpackungsbehälter (3) einen Innenring (21), einen Außenring (20) und einen Mittelring (19) aufweist, wobei der Mittelring (19) von einer Basisfläche (25) weiter nach außen vorsteht als der Innenring (21) und der Außenring (20).

## Claims

1. Pressure relief valve for a packaging container (3), comprising
- a main body (4) with at least one through opening (9, 29), a sealing surface (14) and a peripheral region (18), wherein the peripheral region (18) can be sealingly connected to an inner side (3a) of the packaging container (3) and wherein the sealing surface (14) has an inwardly tapering form, and
- a flexible diaphragm (6), which rests on the sealing surface (14) of the main body (4) in order to bring about a sealing effect, the diaphragm (6) covering the through opening (9), and a fluid (5) being arranged between the sealing surface (14) and the diaphragm (6),
- wherein a recess (10) to accommodate the diaphragm (6) is formed in the main body (4), **characterized in that**
- the recess (10) has a first diameter (D1), which has between 70 and 80% of a total diameter (D2) of the main body (4), and
- a multiplicity of noses (17) that project radially inward is arranged on the peripheral region (18), the noses (17) centering the diaphragm (6) between them.

2. Pressure relief valve according to Claim 1, **characterized in that** an inner annular groove (12) is arranged in the main body (4) radially to the inside of the sealing surface (14), and a central bottom region (24), in which the through opening (9) is arranged, is formed to the inside of the inner annular groove (12).

3. Pressure relief valve according to Claim 1 or 2, **characterized in that** an outer annular groove (13) is arranged in the main body (4) radially to the outside of the sealing surface (14), the peripheral region (18) directly adjoining the outer annular groove (13).

4. Pressure relief valve according to one of the preceding claims, further comprising a multiplicity of retaining elements (22), which are arranged on the peripheral region (18) and are formed integrally with the main body (4).

5. Pressure relief valve according to one of Claims 2 to 4, **characterized in that** a level of the central bottom region (24) perpendicular to a center line (X-X) corresponds to a level of an inner edge (16) of the sealing surface (14).

6. Pressure relief valve according to one of the preceding claims, **characterized in that** the through opening comprises a bottom surface (27) having a multiplicity of microholes (29), the microholes (29) more particularly having a mean diameter of between 30 and 120 µm.

7. Pressure relief valve according to one of the preceding claims, **characterized in that** the diaphragm (6) has a deformable surface oriented toward the sealing surface (14).

8. Pressure relief valve according to Claim 7, **characterized in that** the deformable surface of the diaphragm (6) is produced from EPDM or NBR or silicone rubber.

9. Pressure relief valve according to one of the preceding claims, **characterized in that** the peripheral region (18) of the main body (4) has an inner ring (21), an outer ring (20) and a central ring (19) before being connected to the packaging container (3) in a sealing operation, the central ring (19) projecting further outward from a base surface (25) than the inner ring (21) and the outer ring (20).

## Revendications

1. Soupape de surpression pour un récipient d'emballage (3), comprenant :
- un corps de base (4) comprenant au moins une ouverture de passage (9, 29), une surface d'étanchéité (14) et une région de bord (18), la région de bord (18) pouvant être connectée de manière hermétique à un côté interne (3a) du récipient d'emballage (3), et la surface d'étanchéité (14) présentant une forme se rétrécissant vers l'intérieur et
- une membrane flexible (6) qui repose sur la surface d'étanchéité (14) du corps de base (4) afin de produire un effet d'étanchéité, la membrane (6) recouvrant l'ouverture de passage (9) et un fluide (5) étant disposé entre la surface d'étanchéité (14) et la membrane (6),
- un évidement (10) pour recevoir la membrane (6) étant réalisé dans le corps de base (4),
**caractérisée en ce que**
- l'évidement (10) présente un premier diamètre (D1) qui représente entre 70 et 80% d'un diamètre total (D2) du corps de base (4), et
- une pluralité de nez (17) saillant radialement vers l'intérieur est prévue sur la région de bord (18), les nez (17) centrant entre eux la membrane (6).

2. Soupape de surpression selon la revendication 1, **caractérisée en ce qu'**une rainure annulaire (12) est disposée radialement à l'intérieur de la surface d'étanchéité (14) dans le corps de base (4) et une région de base centrale (24) est formée à l'intérieur de la rainure annulaire interne (12), dans laquelle région de base est disposée l'ouverture de passage (9).

3. Soupape de surpression selon la revendication 1 ou 2, **caractérisée en ce que** radialement à l'extérieur de la surface d'étanchéité (14) est disposée une rainure annulaire (13) dans le corps de base (4), la région de bord (18) étant directement adjacente à la rainure annulaire extérieure (13).

4. Soupape de surpression selon l'une quelconque des revendications précédentes, comprenant en outre une pluralité d'éléments de retenue (22), qui sont disposés sur la région de bord (18) et qui sont formés d'une seule pièce avec le corps de base (4).

5. Soupape de surpression selon l'une quelconque des revendications 2 à 4, **caractérisée en ce qu'**un niveau de la région de base centrale (24) perpendiculaire à un axe médian (X-X) correspond à un niveau d'une arête interne (16) de la surface d'étanchéité (14).

6. Soupape de surpression selon l'une quelconque des revendications précédentes, **caractérisée en ce que** l'ouverture de passage comprend une surface de base (27) avec une pluralité de microperçages (29), les microperçages (29) présentant notamment un diamètre moyen compris entre 30 et 120 µm.

7. Soupape de surpression selon l'une quelconque des revendications précédentes, **caractérisée en ce que** la membrane (6) présente une surface déformable orientée vers la surface d'étanchéité (14).

8. Soupape de surpression selon la revendication 7, **caractérisée en ce que** la surface déformable de la membrane (6) est fabriquée en EPDM ou en NBR ou en caoutchouc siliconé.

9. Soupape de surpression selon l'une quelconque des revendications précédentes, **caractérisée en ce que** la région de bord (18) du corps de base (4) présente, avant une opération de scellement contre le récipient d'emballage (3), une bague interne (21), une bague externe (20) et une bague intermédiaire (19), la bague intermédiaire (19) faisant saillie vers l'extérieur depuis une surface de base (25) plus que la bague interne (21) et la bague externe (20).
